(19) Europäisches Patentamt / European Patent Office / Office européen des brevets

(11) **EP 2 234 354 A1**

(12) **EUROPEAN PATENT APPLICATION**

(43) Date of publication:
29.09.2010 Bulletin 2010/39

(51) Int Cl.:
*H04L 25/02* (2006.01)    *H04L 5/00* (2006.01)

(21) Application number: 09004199.7

(22) Date of filing: 24.03.2009

(84) Designated Contracting States:
AT BE BG CH CY CZ DE DK EE ES FI FR GB GR
HR HU IE IS IT LI LT LU LV MC MK MT NL NO PL
PT RO SE SI SK TR
Designated Extension States:
AL BA RS

(71) Applicant: NTT DoCoMo, Inc.
Chiyoda-ku
Tokyo 100-6150 (JP)

(72) Inventor: **Auer, Gunther, Dr.**
80339 Munich (DE)

(74) Representative: **Schenk, Markus et al**
Schoppe, Zimmermann, Stöckeler & Zinkler
Patentanwälte
Postfach 246
82043 Pullach bei München (DE)

Remarks:
Amended claims in accordance with Rule 137(2)
EPC.

(54) **A radio channel estimator exploiting correlations in space, frequency and time domain**

(57) A radio channel estimator 100 for estimating a radio channel, the radio channel having at least a first dimension and a second dimension, the first and second dimensions being different and corresponding to a frequency, a time or a spatial dimension. The radio channel estimator 100 comprises a receiver 100 for receiving reference symbols being separated in the first dimension and being separated in the second dimension, a processor 120 for processing the reference symbols to obtain a reference radio channel estimate for each of the separated reference symbols, a radio channel condition detector 130 for detecting a first radio channel condition, in which the radio channel has a higher correlation in the first dimension than in the second dimension, or a second radio channel condition, in which the radio channel has a higher correlation in the second dimension than in the first dimension. The radio channel estimator 100 further comprises an interpolator 140 for determining a radio channel estimate lying between at least two reference radio channel estimates by interpolating between two reference radio channel estimates of the first dimension, when the first radio channel condition is detected and by interpolating between two reference radio channel estimates of the second dimension, when the second radio channel condition is detected.

FIG 1A

EP 2 234 354 A1

## Description

The present invention is in the field of radio channel estimation as carried out in radio systems as, for example, mobile communication systems utilizing multi-dimensional radio channels.

Radio channel estimation is, for example, used in conventional mobile communication systems, wherein known symbols, also called reference or pilot symbols, are transmitted from a transmitter to a receiver and the receiver estimates the radio channel based on the knowledge of the reference symbols. As the receiver knows when and how such a reference symbol is transmitted, the radio channel can be estimated and based on the radio channel estimation, data can be detected eliminating or reducing the effects evoked by the radio channel.

Moreover, systems employing multiple transmit and receive antennas, known as multiple-input-multiple-output (MIMO) systems, promise significant gains in channel capacity, cf. I. E. Telatar, "Capacity of Multi-Antenna Gaussian Channels," European Trans. Telecommun., vol. 10, pp. 585-595, Nov. 1999 and G. J. Foschini and M. J. Gans, "On Limits of Wireless Communications in a Fading Environment when using Multiple Antennas," Wireless Personal Communications, vol. 6, pp. 311-335, 1998. Together with orthogonal frequency division multiplexing (OFDM), MIMO-OFDM is selected for wireless local area networks (WLAN) standard IEEE 802.11n, cf. R. Van Nee, V. K. Jones, G. Awater, A. Van Zelst, J. Gardner and G. Steele, "The 802.11n MIMO-OFDM standard for wireless LAN and beyond," Wireless Personal Communications, vol. 37, pp. 445-453, May 2006 and for beyond 3rd generation (B3G) mobile communication systems, cf. M. Tanno, Y. Kishiyama, N. Miki, K. Higuchi, and M. Sawahashi, "Evolved UTRA - physical layer overview," in Proc. IEEE Workshop Signal Processing Advances Wireless Commun. (SPAWC 2007), Helsinki, Finland, pp. 1-8, June 2007.

To facilitate coherent detection, reference symbols or pilot symbols known to the receiver are commonly used. For pilot aided channel estimation (PACE = pilot aided channel estimation), pilots are, for example, equidistantly spaced in the transmitted signal stream, cf. J. K. Cavers, "An Analysis of Pilot Symbol Assisted Modulation for Rayleigh Fading Channels," IEEE Trans. Vehic. Technol., vol. VT-40, pp. 686-693, Nov. 1991. If pilots are spaced sufficiently close to satisfy the sampling theorem, the channel response of the entire data sequence can be retrieved by means of interpolation. For OFDM, the received signal can be correlated in multiple dimensions as, for example, time and frequency. Applied to OFDM PACE is extended by scattered placement of pilots in time and frequency, sampling the channel response in two dimensions, giving rise to two-dimensional (2D) channel estimation by interpolation, cf. P. Höher, "TCM on Frequency Selective Land-Mobile Radio Channels," in Proc. 5th Tirrenia Int. Workshop on Dig. Commun., Tirrenia, Italy, pp. 317-328, Sept. 1991.

Due to its favorable trade-off between achieved channel estimation accuracy and required pilot overhead, 2D-PACE has been selected for a wide range of wireless communication standards, such as terrestrial digital video broadcasting (DVB-T), cf. ETSI EN 300 744, V 1.4.1 (2001-01), "Digital Video Broadcasting (DVB); Framing Structure, Channel Coding and Modulation for Digital Terrestrial Television," European Telecom. Standards Inst. (ETSI), Valbonne, France, 2001 and for beyond 3rd generation (B3G) mobile communication systems, cf. M. Tanno, Y. Kishiyama, N. Miki, K. Higuchi, and M. Sawahashi, "Evolved UTRA - physical layer overview," in Proc. IEEE Workshop Signal Processing Advances Wireless Commun. (SPAWC 2007), Helsinki, Finland, pp. 1-8, June 2007 and ETSI TS 36.211 V8.5.0, "3rd Generation Partnership Project (3GPP); Evolved Universal Terrestrial Radio Access (E-UTRA); Physical Channels and Modulation (Release 8)," tech. rep., Dec. 2008.

In order to assure proper channel estimation, conventional systems use pilot grids, i.e. pilot or reference symbols, which are spaced in time and frequency in a way that interpolation is always possible. This introduces a pilot overhead, which jeopardizes and disadvantageously affects system capacity.

It is therefore the object of the present invention to provide an improved concept for pilot aided channel estimation enabling higher system capacity.

The object is achieved by a channel estimator according to claim 1, a method for channel estimation according to claim 12, a transmitter according to claim 13 and a method for transmitting according to claim 14.

The present invention is based on the finding that in multi-dimensional radio channels, correlation of different dimensions can be exploited in different channel conditions. For example, PACE for MIMO-OFDM may be operated in diverse deployment scenarios, for example, ranging from macro-cells to indoor office environments. For macro-cells, high mobile velocities and large cell sizes may result in high Doppler spreads and channel delay spreads, while spatial correlation between base station (BS) antenna elements is typically encountered. On the other hand, in indoor environments, spatial correlation tends to be low; however, cell sizes together with mobile velocities are substantially smaller.

Embodiments may exploit specific correlations in time, frequency and space in an accordingly designed bandwidth efficient multi-scenario pilot grid. In embodiments, channel estimation may be based on the principle of channel estimation interpolation in three dimensions, i.e. time, frequency and/or space.

Embodiments may therewith alleviate one of the major challenges for MIMO-OFDM systems with a large number of transmit antennas. That is, the increasing pilot overhead that grows with the number of transmit antennas may be reduced according to embodiments of the present invention. Embodiments may exploit a spatial correlation of the MIMO channel, enabling a pilot overhead reduction, which can be as high as a factor of 2 or higher. Therewith, embodiments may enable efficient utilization of a scenario with eight transmit antennas as it is, for example, foreseen for future mobile communication systems as the long-term evolution-advanced (LTE-A) system.

Embodiments of the present invention are based on the finding that in different scenarios, different correlations occur in the radio channel. In some scenarios, there may be a high spatial correlation owing to a low angular spread. These scenarios may correspond to macro-cell scenarios as, for example, outdoor scenarios in which base station antennas are mounted on a rooftop. In other scenarios, a high frequency correlation, i.e. correlation in time direction may occur, as, for example, mobile devices travel with low velocities. In yet other scenarios, high correlation in frequency direction (over subcarriers in a multi-carrier system) may occur, due to short power delay profiles, which occurs, for example, in indoor scenarios where low transmission powers are utilized and reflectors are close by. Embodiments of the present invention may benefit from switching interpolation strategies for channel estimation. In other words, in embodiments, channel estimation may be adapted to the respective scenario. In one scenario, interpolation may be carried out in the frequency domain, where in another scenario, interpolation may be carried out in the time or spatial domain, all using the same grid of pilot or reference symbols.

Therewith, embodiments do not depend on the pilot grid in a way that correlation in a certain dimension always has to be assured, however, embodiments may rely on correlation in either one of the channel dimensions.

Embodiments of the present invention will be detailed with the help of the accompanying Figs., in which:

Fig. 1a    shows an embodiment of a channel estimator;

Fig. 1b    shows an embodiment of a three-dimensional pilot grid;

Fig. 2    shows an embodiment of a diamond-shaped space frequency grid;

Fig. 3    illustrates the angular spread at a base station;

Fig. 4    illustrates the correlation properties of a radio channel in different scenarios;

Fig. 5    illustrates aliasing in the space-frequency domain for different scenarios;

Fig. 6a    illustrates a space-time grid for a sample scenario;

Fig. 6b    illustrates a space-time grid for another sample scenario;

Fig. 7    illustrates simulation results for different channel estimation filters and different scenarios;

Fig. 8a    illustrates a diamond space-time frequency grid with 8 pilots per resource block;

Fig. 8b    illustrates a distributed implementation with 8 pilots per resource block;

Fig. 9a    shows a diamond space-time frequency grid with 16 pilots per resource block; and

Fig. 9b    shows a distributed implementation with 16 pilots per resource block.

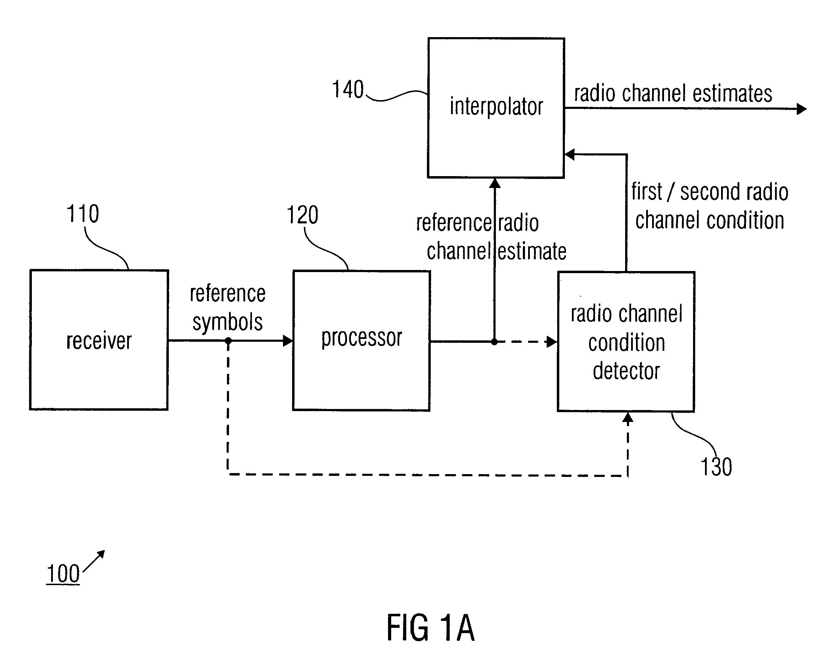

Fig. 1a shows an embodiment of a radio channel estimator 100 for estimating a radio channel. The radio channel has at least a first dimension and a second dimension, the first and second dimensions being different and corresponding to a frequency, a time or a spatial dimension. The radio channel estimator 100 comprises a receiver 110 for receiving reference symbols being separated in the first dimension and being separated in the second dimension.

The radio channel estimator 100 further comprises a processor 120 for processing the reference symbols to obtain a reference radio channel estimate for each of the separated reference symbols. Furthermore, the radio channel estimator 100 comprises a radio channel condition detector 130 for detecting a first radio channel condition, in which the radio channel has a higher correlation in the first dimension than in the second dimension or a second radio channel condition, in which the radio channel has a higher correlation in the second dimension than in the first dimension.

Moreover, the radio channel estimator 100 comprises an interpolator 140 for determining a radio channel estimate lying between at least two reference radio channel estimates by interpolating between two reference radio channel estimates of the first dimension when the first radio channel condition is detected and by interpolating between two reference radio channel estimates of the second dimension when the second radio channel condition is detected.

In embodiments, the radio channel estimator 100 may be adapted for estimating a radio channel having a third dimension. In embodiments, the first dimension may correspond to a spatial dimension, for example, established by utilizing multiple transmit antennas at a base station in a mobile communication system. The second dimension may correspond to the frequency dimension, i.e. the radio channel may comprise multiple carriers, extending over a bandwidth larger than a corresponding coherence bandwidth of the radio channel. The third dimension may correspond to the time dimension, i.e. the radio channel may comprise a number of time slots and the radio channel may be time-variant.

In embodiments, two reference or pilot symbols of the first dimension may be separated by $D_s$ transmit antennas. Two reference symbols of the second dimension may be separated by $D_f$ sub-carriers. Two reference or pilot symbols of the third dimension may be separated by $D_t$ time slots. Embodiments may utilize $D_s, D_f, D_t \in \mathbb{N}$ and $D_s, D_f, D_t \geq 1$. In embodiments, the radio channel may correspond to an OFDM-MIMO radio channel.

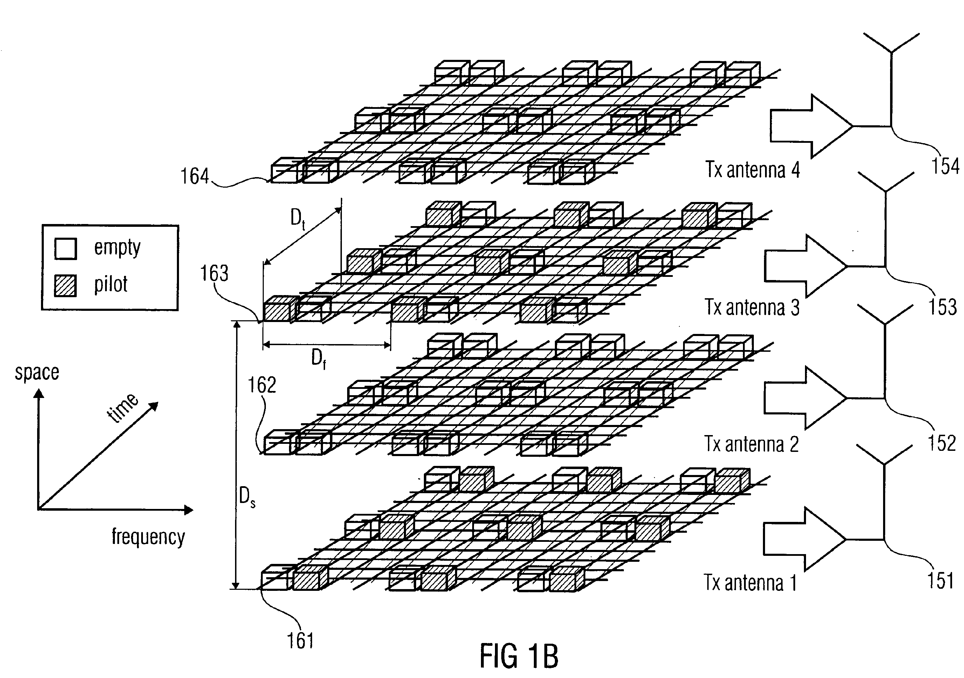

In embodiments considering MIMO-OFDM, the principle of channel estimation by interpolation can be extended to the spatial domain in case transmit antenna elements are spatially correlated, giving rise to three-dimensional (3D) PACE, cf. G. Auer, "3D Pilot Aided Channel Estimation," in Proc. Wireless Commun. & Networking Conf. (WCNC 2009), Budapest, Hungary, Apr. 2009. Fig. 1b illustrates a three-dimensional (3D) pilot grid applicable to MIMO-OFDM systems where transmit antennas are spatially correlated. Fig. 1b illustrates a rectangular 3D pilot grid. Fig. 1b shows four transmit antennas 151, 152, 153 and 154. To each of the four transmit antennas, a time-frequency plane is assigned, 161, 162, 163 and 164. Pilot symbols are indicated by dark cubes, empty cubes indicate silence or discontinuous transmission. It can be seen from Fig. 1b that on transmit antennas 2 and 4, no pilot symbols are transmitted in the scenario considered. On the left-hand side of Fig. 1b, the agenda illustrates representation of empty and pilot cubes as well as the three dimensions of the view graph, namely space, time and frequency.

In the scenario illustrated in Fig. 1b, pilots are only inserted on transmit antennas 1 and 3. Channel estimates for transmit antenna 2 are, for example, generated through spatial correlation. By doing so, the pilot overhead can be reduced by one third. Fig. 1b shows a three-dimensional pilot grid with pilot spacing or separation in time, frequency and space set to $D_t = 5$, $D_f = 4$ and $D_s = 2$.

3D PACE may be utilized in embodiments as an effective means to substantially reduce the pilot overhead as it overcomes the proportional increase of pilot overhead with the number of transmit antennas, cf. ETSI TS 36.211 V8.5.0, "3rd Generation Partnership Project (3GPP); Evolved Universal Terrestrial Radio Access (E-UTRA); Physical Channels and Modulation (Release 8)," tech. rep., Dec. 2008.

A drawback of 3D PACE is that it strictly requires spatially correlated channels. When transmit antennas are mutually uncorrelated, pilot symbols have to be utilized on each transmit antenna and resources consumed by pilot symbols grow in proportion to the number of transmit antennas, cf. B. Hassibi and B. M. Hochwald, "How much Training is Needed in Multiple-Antenna Wireless Links?," IEEE Trans. Information Theory, vol. 49, pp. 951-963, Apr. 2003 and G. Auer, "Analysis of Pilot-Symbol Aided Channel Estimation for OFDM Systems with Multiple Transmit Antennas," in Proc. IEEE Int. Conf. Commun. (ICC 2004), Paris, France, pp. 3221-3225, June 2004. On a MIMO-OFDM downlink where the base station transmitter is mounted above the rooftop, the angles of departing rays are contained within a narrow angular spread so that the assumption of spatially correlated transmit antennas is justified. However, in an indoor environment, the spatial correlation tends to be low so that 3D PACE may only improve the channel estimation accuracy, but cannot be exploited to reduce the pilot overhead, cf. M. Stege, P. Zillmann, and G. Fettweis, "MIMO Channel Estimation with Dimension Reduction," in Proc. Int. Symp. Wireless Pers. Multimedia Commun. (WPMC 2002), Hawaii, USA, Oct. 2002 and J.-W. Choi and Y.-H. Lee, "Complexity-Reduced Channel Estimation in Spatially Correlated MIMO-OFDM Systems," IEICE Trans. Commun., vol. E90-B, pp. 2609-2612, Sept. 2007.

Embodiments of the present invention may exploit the reversal correlation properties between outdoor macro-cells and indoor environments, which are generally observed for wireless systems. In other words, the radio channel condition detector 130 can be adapted for detecting an outdoor macro-cell scenario as the first channel condition and an indoor environment as the second channel condition. Specifically, for macro-cells, correlation in frequency and in time is typically significantly lower due to the large cell sizes and high mobile velocities, but the correlation in space tends to be high due to the above rooftop antenna deployment. For indoor office environments, the opposite is true, spatial correlation is diminishing, while low mobility and small cell sizes result in substantially higher correlation in time and frequency. By appropriate dimensioning of the 3D pilot grid, embodiments may exploit this reversal indoor-outdoor correlation property to utilize high correlation in one dimension, i.e. in time, frequency or space dimension to support low correlation in another dimension. By doing so, pilot overhead can be substantially reduced compared to conventional pilot design that is typically derived from the worst-case channel conditions.

Embodiments may comprise a transmitter for enabling radio channel estimation of a radio channel, wherein the radio channel has at least a first dimension and a second dimension. The first and second dimensions being different and corresponding to a frequency, a time or a spatial dimension. Moreover, the radio channel has at least a first condition, in which the correlation measure of the radio channel of the first dimension is higher than a correlation measure of the radio channel of the second dimension and a second condition, in which the correlation measure of the radio channel of the second dimension is higher than the correlation measure of the radio channel of the first dimension. In other words, the two dimensions may, for example, correspond to a time dimension and a frequency dimension, the radio channel correspondingly having a coherence time and a coherence bandwidth, a coherence length, respectively if one of the dimensions is the spatial dimension.

Moreover, the transmitter may comprise a reference symbol generator for generating reference symbols such that in the first condition, two reference symbols are separated in the second dimension by more than the correlation measure of the radio channel of the second dimension, and in the second condition two reference symbols are separated in the first dimension by more than the correlation measure of the radio channel of the first dimension. In other words, reference or pilot symbols may be inserted into a signal from a transmitter in a way such that in one condition, two reference symbols are separated in the frequency domain by more than a coherence bandwidth. However, in this condition, they are separated in the time domain by less than the coherence time, enabling interpolation in the time domain or dimension. However, in a second condition, the situation is vice-versa, i.e. then two reference symbols in the time domain are separated by more than the coherence time. However, in the frequency domain, separation is less than the coherence bandwidth, enabling interpolation in the frequency domain or dimension. Therewith, in the first condition, correlation is possible in the time domain, i.e. a potential channel estimator can carry out interpolation between reference symbols in the time domain. In the second condition, correlation is present in the frequency domain and a corresponding channel estimator can carry out interpolation in the frequency domain. Similarly, in one condition, correlation may be present in the spatial domain and the channel estimator may carry out interpolation in the spatial domain.

Embodiments may achieve increased or enhanced system capacity as a pilot overhead or a reference symbol overhead can be reduced significantly as correlation can be exploited in either one of the dimensions of the radio channel. In other words, interpolation may be carried out in each one of the times, the frequency or the spatial dimension.

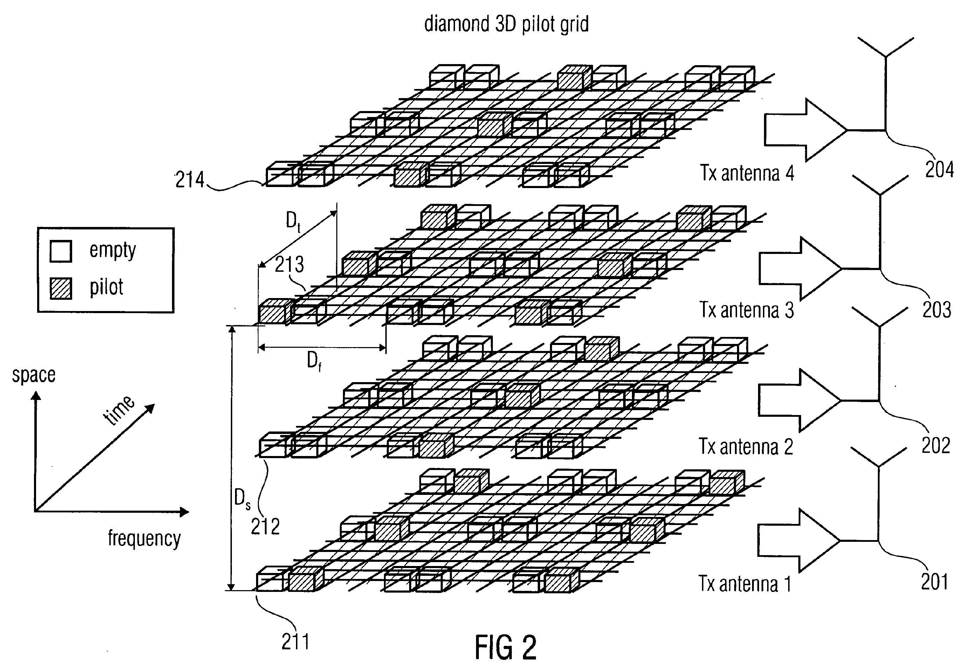

Fig. 2 illustrates a diamond 3D pilot grid. Along the lines of Fig. 1b, Fig. 2 illustrates four transmit antennas 201, 202, 203 and 204. According to Fig. 1b, Fig. 2 shows four time-frequency planes 211, 212, 213 and 214, which represent time frequency pilot grids. According to the above representation, empty cubes represent empty transmission slots and dark cubes represent the reference symbols. Again, it can be seen that reference symbols are spaced by $D_s$ in the spatial domain, $D_t$ in the time domain and $D_f$ in the frequency domain.

Fig. 2 shows an embodiment of a diamond shaped space-frequency grid. In G. Auer, "3D Pilot Aided Channel Estimation," in Proc. Wireless Commun. & Networking Conf. (WCNC 2009), Budapest, Hungary, Apr. 2009, such pilot grid was shown to be effective improve the channel estimation accuracy for 3D PACE. If appropriately dimensioned and complemented by an adaptive, scenario dependent channel estimation unit. The grid in Fig. 2 may also enable embodiments carrying out reversal high-low correlation (RHiLoC) PACE. For the grid in Fig. 2 the pilot spacings in frequency and space allow for two interpretations: either $D_f^{(1)} = 4$ and $D_s^{(1)} = 2$, or alternatively, $D_f^{(2)} = 8$ and $D_s^{(2)} = 1$.

The former interpretation with $D_s^{(1)} = 2$ implies that the channel can be estimated by interpolation in space over transmit antennas; so that reliable estimates for all transmit antennas are feasible without the need to exploit the frequency correlation.

Then interpolation in frequency direction is possible with frequency spacing $D_f^{(1)} = 4$, although for a given antenna element the frequency spacing would be $D_f^{(2)} = 8$. This effectively means that spatial correlation is exploited to facilitate frequency interpolation. The latter interpretation allows for the opposite; high frequency correlation provides channel estimates by frequency interpolation with $D_f^{(2)} = 8$, so that spatial interpolation is not necessary to obtain the complete space-frequency channel response. Clearly, the former interpretation with $D_f^{(1)}$, $D_f^{(1)} < D_f^{(2)}$ and $D_s^{(1)}$, $D_s^{(1)} > D_s^{(2)}$ is applicable for macro-cell scenarios where spatial correlation tends to be high, while frequency correlation is low. Likewise, the latter interpretation with $D_f^{(2)}$ and $D_s^{(2)}$ applies to indoor environments where reversal channel correlations are encountered. When combined with an adaptable channel estimation unit that switches between outdoor environments with $D_f^{(1)}$ and $D_s^{(1)}$, and indoor environments with $D_f^{(2)}$ and $D_s^{(2)}$, the pilot overhead is reduced roughly by the factor $D_s^{(1)}$ in embodiments.

In order to demonstrate the benefits of the embodiments of the present invention, a system and channel model will be introduced in the following. An OFDM system with $N_c$ subcarriers, and $L$ OFDM symbols per frame is considered. The transmit signal vector of subcarrier $n$ at OFDM symbol $\ell$ is emitted by an antenna array with $N_T$ elements, denoted

by $x_{n,\ell} = [x_{n,\ell}^{(1)}, \cdots, x_{n,\ell}^{(N_T)}]^T$. The total transmit power is set to $E\{\| x_{n,\ell} \|^2 \} = E_d$. OFDM modulation is performed by a $N_c$-point inverse DFT (IDFT, DFT = Discrete Fourier Transform), followed by insertion of a cyclic prefix (CP) of $N_{CP}$ samples. Assuming perfect orthogonality in time and frequency, the received signal of symbol $(n,\ell)$ is given by

$$y_{n,\ell} = \mathbf{x}_{n,\ell}^T \mathbf{h}_{n,\ell} + z_{n,\ell}; \quad \begin{array}{l} 0 \leq n < N_c \\ 0 \leq \ell < L \end{array} \qquad (1)$$

where $z_{n,\ell}$ denotes additive white Gaussian noise (AWGN) with zero mean and variance $N_0$. The received signal (1) applies to a mobile receiver equipped with a single receive antenna; the extension to multiple receive antennas is treated in J.-W. Choi and Y.-H. Lee, "Complexity-Reduced Channel Estimation in Spatially Correlated MIMO-OFDM Systems," IEICE Trans. Commun., vol. E90-B, pp. 2609-2612, Sept. 2007, H. Miao and M. J. Juntti, "Space-Time Channel Estimation and Performance Analysis for Wireless MIMO-OFDM Systems With Spatial Correlation," IEEE Trans. Vehic. Technol., vol. 54, pp. 2003-2016, Nov. 2005 and J. Wang and K. Araki, "Pilot Symbol Aided MAP-Based 3D Channel Estimation for Multi-User MIMO-OFDM Systems," IEICE Trans. Commun., vol. E89-B, pp. 801-808, Mar. 2006. In case of MIMO-OFDM with uncorrelated receive antennas, where channel estimation for each receive antenna is carried out independently, (1) directly applies. When receive antennas are correlated, the accuracy of the channel estimates may be improved by spatial smoothing of the received pilots over the receive antennas.

In vector notation the signal of OFDM symbol $\ell$ can be conveniently expressed as

$$\mathbf{y}_\ell = \mathbf{X}_\ell \mathbf{h}_\ell + \mathbf{z}_\ell \in \mathbb{C}^{N_c \times 1} . \qquad (2)$$

The 2D transmitted signal matrix of dimension $N_c \times N_T N_c$ is composed of transmit symbols in frequency and space, denoted by $\mathbf{X}_\ell = diag[\mathbf{x}_{1,\ell}^T, \cdots, \mathbf{x}_{N_c,\ell}^T]$. Likewise the 2D matrix of dimension $N_T N_c \times 1$ describing the CTF (Channel Transfer Function) is given by $\mathbf{h}_\ell = [\mathbf{h}_{1,\ell}^T, \cdots, \mathbf{h}_{N_c,\ell}^T]^T$. Finally, the $N_c \times 1$ dimension noise vector is composed of $\mathbf{z}_\ell = [z_{1,\ell}, \cdots, z_{N_c,\ell}]^T$.

The received signal of one frame is composed of $L$ OFDM symbols, $\mathbf{y} = [\mathbf{y}_1^T, \cdots, \mathbf{y}_L^T]^T$, which is in the form

$$\mathbf{y} = \mathbf{X}\mathbf{h} + \mathbf{z} \in \mathbb{C}^{N_c L \times 1} \qquad (3)$$

with $\mathbf{X} = diag[\mathbf{X}_1, \ldots, \mathbf{X}_{,L}]$, $\mathbf{h} = [\mathbf{h}_1^T, \cdots, \mathbf{h}_L^T]^T$ and $\mathbf{z} = [\mathbf{z}_1^T, \cdots, \mathbf{z}_L^T]^T$.

In the following a channel model will be introduced. The $N_T \times 1$ dimension vector $\mathbf{h}_{n,\ell}$ accounts for the channel transfer function (CTF). The $\mu$-th column of $\mathbf{h}_{n,\ell}$ describes the CTF between transmit antenna $\mu$ and the receiver, denoted by

$$h_{n,\ell}^{(\mu)} = \{\mathbf{h}_{n,\ell}\}_\mu = \sum_{q=1}^{Q} c_{q,\ell} e^{-j2\pi \frac{n\tau_q}{T}} a^{(\mu)}(\varphi_q) \qquad (4)$$

where $T = N_{DFT} T_{spl}$ and $T_{spl}$ represents the sample duration. Furthermore, $d$ denotes the antenna element spacing, and $\lambda$ is the carrier wavelength. A normalized average channel gain, $E\{| h_{n,\ell}^{(\mu)} |^2 \} = \sigma_h^2 = 1$ is assumed. The complex valued tap weight $c_{q,\ell}$ of channel tap $q$, with $1 \leq q \leq Q$, departs from the BS with angles of departure (AoD) $\varphi_q$, and arrives at the mobile receiver with tap delay $\tau_q$. Time variations due to mobile velocities caused by the Doppler effect lead to variations of $c_{q,\ell}$ over time (OFDM symbol index $\ell$), while delays due to multi-path propagation $\tau_q$ impose variations over frequency (subcarrier index $n$). The spatial contributions to the CTF (4) constitute the array response for a uniform linear array (ULA) with antenna spacing $d$, the array response of antenna element $\mu$, is in the form

$$a^{(\mu)}(\varphi) = e^{j2\pi D\mu\sin\varphi}; \quad \begin{array}{c} 0 \le \mu < N_T \\ D = \dfrac{d}{\lambda} \end{array} \tag{5}$$

In the following the correlation properties od the radio channel will be illuminated. The 2nd order statistics are determined by the three- dimensional (3D) correlation function

$$R[\Delta_\mu, \Delta_n, \Delta_\ell] = E\{h_{n,\ell}^{(\mu)}(h_{n+\Delta_n,\ell+\Delta_\ell}^{(\mu+\Delta_\mu)})^*\}$$
$$= R_t[\Delta_\ell]\sum_{q=1}^{Q} R_{f,q}[\Delta_n] \cdot R_{s,q}[\Delta_\mu] \tag{6}$$

composed of three independent correlation functions in time, frequency and space. The statistics of the time variations caused by the Doppler effect are described by the correlation function in time, cf. W. C. Jakes, Microwave Mobile Communications. Wiley, NY, 1974:

$$R_t[\Delta_\ell] = E\{h_{n,\ell}^{(\mu)}(h_{n,\ell+\Delta_\ell}^{(\mu)})^*\}$$
$$= J_0(2\pi\Delta_\ell f_{D,max}T_{sym}) \tag{7}$$

where $f_{D,max}$ is the maximum Doppler frequency and $J_0(\cdot)$ represents the zero order Bessel function of the first kind. The correlation function in frequency describes channel distortion due to multi-path propagation, which for the channel model (5) is in the form

$$R_{f,q}[\Delta_n] = E\{h_{n,\ell}^{(\mu)}(h_{n+\Delta_n,\ell}^{(\mu)})^*\}$$
$$= \sigma_q^2 e^{-j2\pi\tau_q\frac{\Delta_n}{T}} \tag{8}$$

where $\sigma_q^2 = E[|c_{q,\ell}|^2]$.

For the considered channel model (5), the spatial correlation between antennas $\mu$ and $\mu+\Delta_\mu$ yields

$$R_{s,q}[\Delta_\mu] = E[a^{(\mu)}(\varphi)(a^{(\mu+\Delta_\mu)}(\varphi))^*]$$

$$= e^{j2\pi D\Delta_\mu\sin\varphi_q}; \quad D = \frac{d}{\lambda} \tag{9}$$

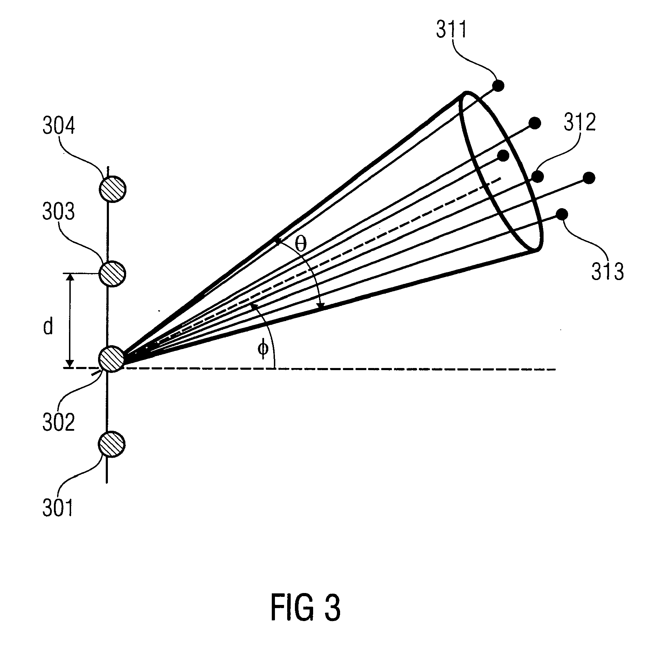

In case the base station is mounted above rooftop, the AoDs $\varphi_q$ are typically distributed around the mean AoD $\phi$ within a given angular spread $\theta$, so that $\varphi_q \in [\phi-\theta,\phi+\theta]$, $\forall q$, leading to spatial correlation between transmit antennas, as shown in Fig. 3.

Fig. 3 illustrates a spatial channel model in terms of the angles of departures (AODs) at a base station, which are distributed around a mean φ with an angular spread of θ. An inter-antenna element spacing of d is assumed. Fig. 3 illustrates four antenna elements 301, 302, 303 and 304, which are assumed to be deployed at the base station. The radio channel between the base station and a potential mobile station is composed of multiple paths, which can be modeled as rays, running along different directions, for example, being evoked by different reflectors, scatters, etc. In Fig. 3, some of these paths are exemplified as 311, 312, 313, etc. Fig. 3 illustrates that the angles of departures distribute around a main direction with an angle φ with an angular spread of θ.

It is generally accepted that both $R_f^{(\mu)}[\Delta_n]$ and $R_t^{(\mu)}[\Delta_\ell]$ are strictly band-limited, cf. F. Sanzi and J. Speidel, "An Adaptive Two-Dimensional Channel Estimator for Wireless OFDM with Application to Mobile DVB-T," IEEE Trans. Broadcasting, vol. 46, pp. 128-133, June 2000. That is, the inverse Fourier transform of $R_f^{(\mu)}[\Delta_n]$ described by the power delay profile is essentially non-zero in the range $[0, \tau_{max}]$, where $\tau_{max}$ is the maximum channel delay.

Likewise, the Fourier transform of $R_t^{(\mu)}[\Delta_\ell]$ describing time variations due to mobile velocities is given by the Doppler power spectrum, non-zero within $[-f_{D,max}, f_{D,max}]$, wherein $|f_{D,max}|$ corresponds to the maximum Doppler frequency. Similar characteristics are observed for the spatial correlation, cf. IST-4-027756 WINNER II, "D1.1.2 WINNER II Channel Models," Sept. 2007 when antennas are mounted above rooftop: the propagation paths associated to tap delays $\tau_q$ are clustered around a mean AoD φ with angular spread θ, as illustrated in Fig. 3. On the other hand, when the BS is located below rooftop or indoors, spatial correlation tends to be low.

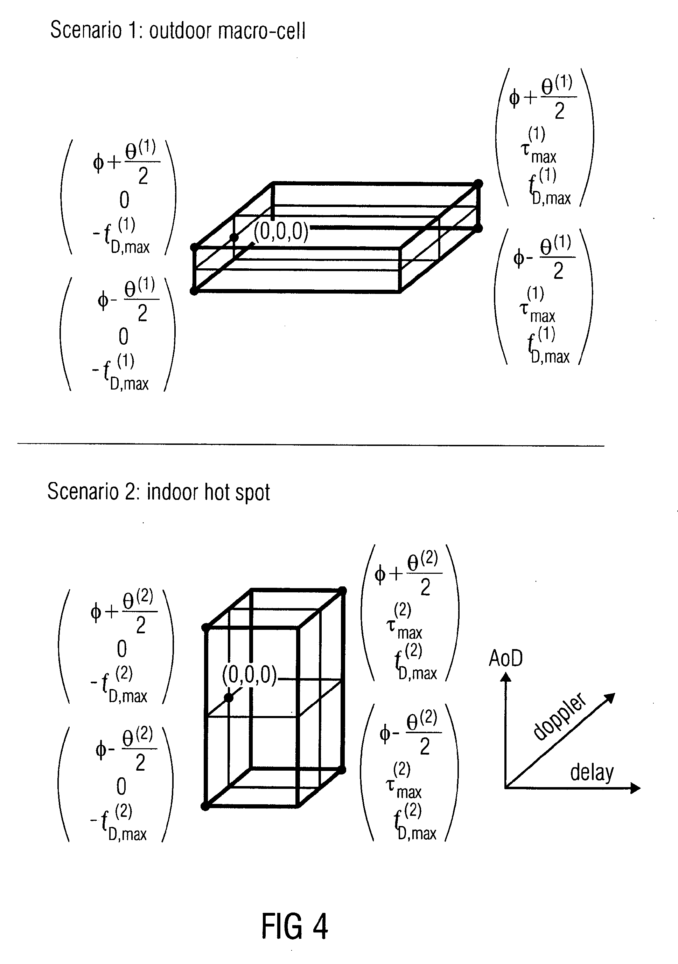

In outdoor macro-cell deployments (scenario 1) maximum channel delays $\tau_{max}^{(1)}$ and Doppler frequencies $f_{D,max}^{(1)}$ are expected to be substantially higher than for indoor hot spot deployments (scenario 2) with $\tau_{max}^{(2)}$ and $f_{D,max}^{(2)}$. The opposite is true for the AoD distribution; scenario 1 is likely to exhibit much lower angular spreads than scenario 2, so that $\theta^{(1)} << \theta^{(2)} \leq 2\pi$. This is illustrated in Fig. 4 by two boxes associated to scenario 1 and 2, which mark the area of channel delays $\tau_q$, Doppler frequencies $f_D$ and AoDs φ where the channel response (4), as well as the corresponding correlation (6), is essentially non-zero.

Fig. 4 illustrates at the top scenario 1, which corresponds to an outdoor macro-cell scenario and scenario 2 at the bottom, which corresponds to an indoor hot-spot scenario. Fig. 4 illustrates correlation measures in terms of the Doppler spread in the frequency domain, the power delay spread in the time domain and an angle of departure spread in the spatial domain. It can be seen that in the first scenario, the spread $\theta^{(1)}$ around the angle of departure φ is rather low, whereas the Doppler spread $f_{D,max}^{(1)}$ in the frequency domain and the delay spread $\tau_{max}^{(1)}$ in the time domain is rather high. It can be seen in scenario 2 that the angular spread $\theta^{(2)}$ in the spatial domain is rather high, where the Doppler spread $f_{D,max}^{(2)}$ in the frequency domain and the delay spread $\tau_{max}^{(2)}$ in the time domain are rather low. This is also indicated by a number of explicit coordinates, which are given in terms of the maximum spreads as the maximum Doppler frequencies $f_{D,max}^{(1)}$, $f_{D,max}^{(2)}$, the maximum delays $\tau_{max}^{(1)}$, $\tau_{max}^{(2)}$ and the angular spread $\theta^{(1)}$, $\theta^{(2)}$.

Summarizing, Fig. 4 depicts the correlation properties of the channel for outdoor macro-cells (scenario 1) and indoor hot-spots (scenario 2). For outdoor macro-cells high Doppler and channel delays, $f_{D,max}^{(1)}$ and $\tau_{max}^{(1)}$ together with low angular spreads $\theta^{(1)}$ are observed. On the other hand, for indoor hot spots significantly lower Doppler and channel delays, $f_{D,max}^{(2)} \ll f_{D,max}^{(1)}$ and $\tau_{max}^{(2)} \ll \tau_{max}^{(1)}$, but higher angular spreads $\theta^{(2)} >> \theta^{(1)}$ are observed.

Pilot aided channel estimation (PACE) samples the noisy channel response and retains channel estimates of the entire sequence by means of interpolation, cf. J. K. Cavers, "An Analysis of Pilot Symbol Assisted Modulation for Rayleigh Fading Channels," IEEE Trans. Vehic. Technol., vol. VT-40, pp. 686-693, Nov. 1991. For conventional 2D-PACE, known reference symbols (pilots) are inserted with equidistant pilot spacing $D_t$ in time and $D_f$ in frequency, cf. P. Höher, "TCM on Frequency Selective Land-Mobile Radio Channels". By extending the principle of channel estimation by interpolation to the spatial domain, three-dimensional (3D) PACE generates channel estimates by interpolation in time, frequency and space. Spatial correlations are exploited in the way that pilots are inserted on a selected subset of transmit antennas with equidistant pilot spacing in space of $D_s$, cf. G. Auer, "3D Pilot Aided Channel Estimation," in Proc. Wireless Commun. & Networking Conf. (WCNC 2009), Budapest, Hungary, Apr. 2009.

By doing so, the channel response is sampled in three dimensions with rates $D_t T_{sym}$ in time, $D_f/T$ in frequency and $D_s \frac{d}{\lambda}$ in space. One major drawback of 3D-PACE is that spatial correlation may not always be sufficient to support $D_s > 1$.

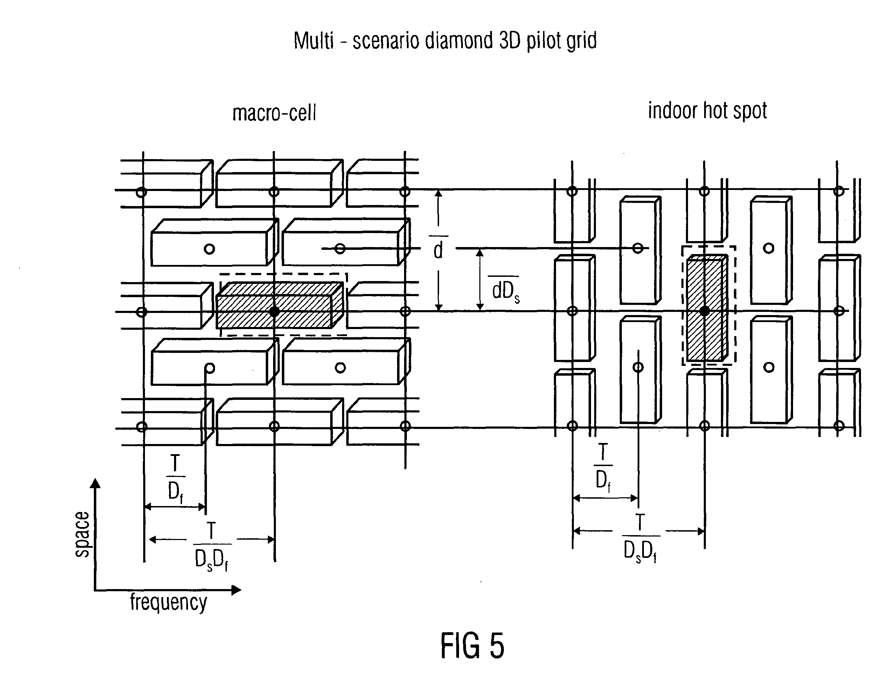

The objective is to support different deployment scenarios, cast in the set $S$, by one pilot grid with minimal overhead. One possibility to achieve this is the pilot grid depicted in Fig. 2 where pilots in the space-frequency plain are arranged in a diamond shaped pattern. In the following it will be demonstrated that this grid facilitates channel estimation for $|S|=2$, which applies to the considered outdoor macro-cell (scenario 1) and indoor hot spot deployments (scenario 2). For pilot aided channel estimation (PACE), known reference symbols (pilots) sample the channel response. In the spectral domain, sampling will be observed by aliasing, in the way that the spectrum of the channel response is replicated at regular intervals. This is illustrated in Fig. 5 where boxes mark the area where spectral components of the channel response are essentially non-zero. As the spectral components of the channel response (4) are strictly band-limited as shown in Fig. 4, the channel response can be retained by means of interpolation, provided that the spectral components of the channel response do not overlap. Clearly, the appropriate placement of pilots according to Fig. 2 means that no spectral overlap is observed for both scenarios 1 and 2.

Fig. 5 illustrates the spectral domain of the diamond-shaped space-frequency grid as it was described with the help of Fig. 2. Due to sampling the space-frequency plane with rate $D_f/T$ and $D_s \frac{d}{\lambda}$, aliasing is observed. It can further be observed that aliases do not overlap with the original spectrum, for both outdoor macro-cells and indoor hot spots. Embodiments may select channel estimation in a way that matches the respective deployment scenario, therewith enabling the channel response to be retained by means of interpolation. Fig. 5 illustrates two space-frequency planes, one for the macro-cell scenario on the left-hand side and another one for the indoor hot-spot scenario on the right-hand side. It can be seen on the left-hand side that correlation is rather high in the frequency domain and low in the space domain, whereas the situation as vice-versa in the indoor hot-spot scenario on the right-hand side. Embodiments may carry out interpolation in the space domain for the macro-cell scenario and correspondingly in the frequency domain for the indoor hot-spot scenario. Fig. 5 illustrates the advantage of embodiments that a similar pilot grid can be used for both scenarios by switching the interpolation domain in the channel estimator.

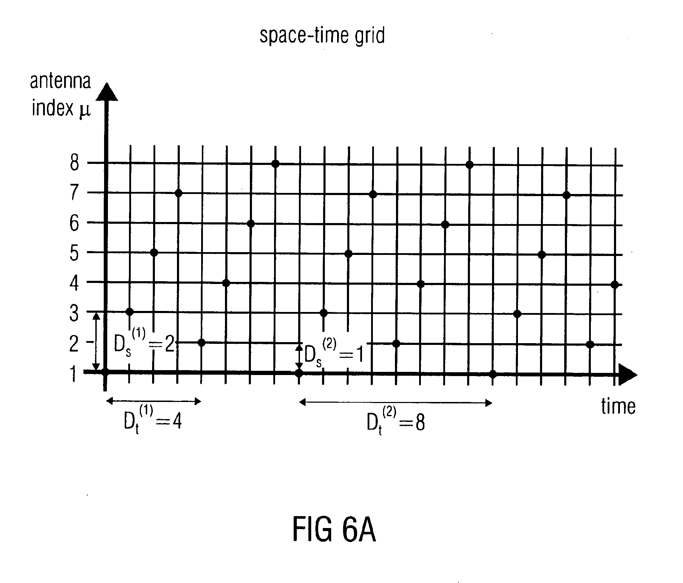

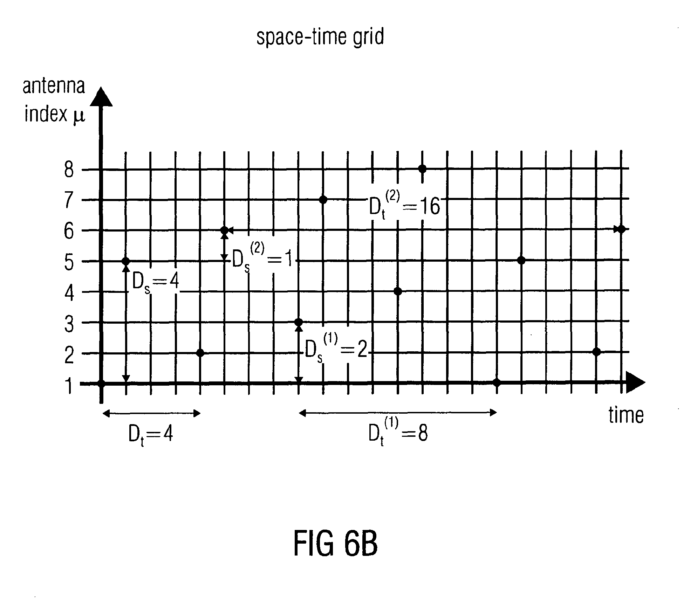

Pilot grids with a diamond shape can also be constructed for the space-time plane, simply by exchanging the space and frequency axes in Fig. 2. Figs. 6a and 6b illustrate embodiments carrying out the reversal high-low correlation (RHiLoC) PACE space-time pilot grid for $N_T = 8$ transmit antennas. According to the above description, dependent on the channel conditions, different combinations or interpolations based on the pilot spacings are possible. For simplification purposes only, pilot or reference symbols in the frequency direction are omitted in Figs. 6a and 6b.

Fig. 6a illustrates a space-time grid with $D_s = 2$. In outdoor macro-cells, which are indicated by $D_s^{(1)} = D_s = 2$ and $D_t^{(1)} = D_t = 4$ is chosen. For the indoor hot-spot scenario, the spatial interpolation may not be feasible and $D_s^{(2)} = 1$ and $D_t^{(2)} = 8$ is chosen.

Fig. 6b illustrates another space-time grid with $D_s = 4$. This corresponds, for example, to a highway scenario, in which high spatial correlation can be observed together with low time correlation, so that $D_s = 4$ and $D_t = 4$. In urban scenarios, where velocities are typically lower, the spacings $D_s^{(1)} = 2$ and $D_t^{(1)} = D_t \frac{D_s}{D_s^{(1)}} = 8$ might be preferable. For the indoor hot-spot scenario $D_s^{(2)} = 1$ and $D_t^{(2)} = 16$ is chosen.

In the general case of a space-time-frequency grid, the pilot spacings in time $D_t$ and frequency $D_f$ can be traded with the pilot spacing in space $D_s$. The pilot spacings that support the set of deployment scenarios $S$ may satisfy the following relation

$$D_s D_f D_t = D_s^{(s)} D_f^{(s)} D_t^{(s)}, \quad s \in S \qquad (10)$$

A regular 3D grid can be uniquely described by Y. Li, "Pilot-Symbol-Aided Channel Estimation for OFDM in Wireless Systems," IEEE Trans. Vehic. Technol., vol. 49, pp. 1207-1215, July 2000,

$$\begin{bmatrix} \mu \\ n \\ \ell \end{bmatrix} = \mathbf{D}\tilde{\mathbf{p}} + \mathbf{p}_0 \; ; \mathbf{D} = \begin{bmatrix} D_s & \delta_{sf} & \delta_{st} \\ d_{sf} & D_f & \delta_{ft} \\ d_{st} & d_{ft} & D_t \end{bmatrix}, \mathbf{p}_0 = \begin{bmatrix} \mu_0 \\ n_0 \\ \ell_0 \end{bmatrix} \qquad (11)$$

where $\tilde{\mathbf{p}} = [\tilde{\mu}, \tilde{n}, \tilde{\ell}]^T$ is the pilot index, as a general convention, variables describing pilot symbols will be marked with a - in the following. Furthermore, $\mathbf{p}_0 = [\mu_0, n_0, \ell_0]^T$ accounts for the shift of the 1st pilot with respect to $[0,0,0]^T$. The transmitted signal sequence containing only pilots is denoted by, $\{\tilde{x}_{\tilde{n},\tilde{\ell}}^{(\tilde{\mu})}\} = \{x_{n,\ell}^{(\mu)}\}$, with $\mu$, $n$ and $\ell$ given by (11). In general, non-zero off-diagonal elements of $\mathbf{D}$ assemble a non-rectangular pilot grid; setting $d_{ft} \neq 0$ and/or $\delta_{ft} \neq 0$ in (11) results in a shifted time-frequency grid over indices $n$ and $\ell$, e.g. diamond shaped grid, cf. J. Choi and Y. Lee, "Optimum Pilot Pattern for Channel Estimation in OFDM Systems," IEEE Trans. Wireless Commun., vol. 4, pp. 2083-2088, Sept. 2005 or the DVB-T grid, cf. F. Sanzi and J. Speidel, "An Adaptive Two-Dimensional Channel Estimator for Wireless OFDM with Application to Mobile DVB-T," IEEE Trans. Broadcasting, vol. 46, pp. 128-133, June 2000.

The parameters $d_{sf}$, $\delta_{sf}$ and $d_{st}$, $\delta_{st}$ shift pilots along the space-frequency and space-time dimensions, respectively. Fig. 1 plots a 3D pilot grid with parameters $D_t = 5$, $D_f = 4$, $D_s = 2$ and $d_{sf} = 1$, while all other off-diagonal elements are set to zero. Setting $\delta_{sf} = 1$, with all other parameters according to Fig. 1, results in a diamond shaped space-frequency grid, as shown in Fig. 2.

In order to obtain channel estimates of all $N_T$ transmit antennas, pilots belonging to different transmit antennas are orthogonally separated in time and/or frequency. One way to achieve this is by imposing the condition of either $d_{sf}$ $mod\,D_f \neq 0$ or $d_{st}\,mod\,D_t \neq 0$ in (11). In Fig. 1 and Fig. 2 pilots from different antenna elements are separated in frequency by setting $d_{sf} = 1$ and $d_{st} = 0$. This provides a subsampled version of the 3D CTF $\mathbf{h}$ in (3) corrupted by noise, which avoids interference between pilots belonging to different transmit antennas. Note, there are other possibilities to orthogonally separate the pilots, but they lead to higher complexity and/or at least the same pilot overhead, cf. G. Auer, "Analysis of Pilot-Symbol Aided Channel Estimation for OFDM Systems with Multiple Transmit Antennas," in Proc. IEEE Int. Conf. Commun. (ICC 2004), Paris, France, pp. 3221-3225, June 2004.

Nevertheless, the proposed 3D PACE can also be generalized to other schemes, such as phase shifted pilot sequences, cf. I. Barhumi, G. Leus, and M. Moonen, "Optimal training design for MIMO OFDM systems in mobile wireless channels," IEEE Trans. Signal Processing, vol. 51, pp. 1615-1624, June 2003, by extending, cf. W. G. Jeon, J. H. Paik, and Y. S. Cho, "Two Dimensional MMSE Channel Estimation for OFDM Systems with Transmitter Diversity," in Proc. IEEE Vehic. Technol. Conf. 2001-Fall (VTC'F01), Atlantic City, USA, Oct. 2001 and G. Auer, "Channel Estimation for OFDM Systems with Multiple Transmit Antennas by Filtering in Time and Frequency," in Proc. IEEE Vehic. Technol. Conf. 2003-Fall (VTC'F03), Orlando, USA, Oct. 2003, from two to three dimensions.

Not all available pilots may be utilized for channel estimation. Rather the estimation of the CTF at a certain subcarrier may be restricted to a subset of pilots in time, $M_t$, frequency, $M_f$, and space, $M_s$. The received pilot sequence $\tilde{\mathbf{y}} = \tilde{\mathbf{h}} + \tilde{\mathbf{z}}$ of dimension $M \times 1$, with $M = M_t M_f M_s$, is a subsampled version of the 3D CTF $\mathbf{h}$ in (4) corrupted by noise.

The estimate of the 3D CTF $\mathbf{h}$ in (3) denoted by $\tilde{h}$ is obtained by means of minimum mean squared error (MMSE) based 3D interpolation. The Wiener interpolation filter (WIF) is implemented by an FIR filter, $\mathbf{w}_n$, with $M = M_t M_f M_s$ taps. The CTF estimate for subcarrier $n$, OFDM symbol $\ell$ and transmit antenna $\mu$ is given by

$$\hat{h}_{n,\ell}^{\mu} = \mathbf{w}^H[\mathbf{n}]\tilde{\mathbf{y}} = \mathbf{r}_{h\tilde{y}}^H[\mathbf{n}]\mathbf{R}_{\tilde{y}\tilde{y}}^{-1}\tilde{\mathbf{y}} \qquad (12)$$

where the vector $\mathbf{n} = [\mu, n, \ell]^T$ points to the symbol to be estimated. The WIF $\mathbf{w}[\mathbf{n}] = \mathbf{R}_{\tilde{y}\tilde{y}}^{-1}\mathbf{r}_{h\tilde{y}}[\mathbf{n}]$ minimizes the means squared error (MSE) between the desired response, $h_{n,\ell}^{(\mu)}$, and the filtered output, $\hat{h}_{n,\ell}^{(\mu)}$, given the received pilot sequence $\tilde{\mathbf{y}}$. The 3D auto and cross-correlation terms $\mathbf{R}_{yy} = E\{yy^H\}$ and $\mathbf{r}_{h\tilde{y}}[\mathbf{n}] = E\{\tilde{\mathbf{y}}(h_{n,\ell}^{(\mu)})^*\}$ are specified in G. Auer, "3D Pilot Aided Channel Estimation," in Proc. Wireless Commun. & Networking Conf. (WCNC 2009), Budapest, Hungary, Apr. 2009.

The WIF is matched to the long-term channel conditions, which include the considered deployment scenario.

To assemble an appropriate 3D pilot grid for deployment scenario $s \in S$, the corresponding pilot spacings need to satisfy the sampling theorem, cf. F. Sanzi and J. Speidel, "An Adaptive Two-Dimensional Channel Estimator for Wireless OFDM with Application to Mobile DVB-T," IEEE Trans. Broadcasting, vol. 46, pp. 128-133, June 2000 and G. Auer, "3D Pilot Aided Channel Estimation," in Proc. Wireless Commun. & Networking Conf. (WCNC 2009), Budapest, Hungary, Apr. 2009,

$$D_f^{(s)} < \frac{T}{\tau_{max}^{(s)}}, \qquad D_t^{(s)} < \frac{1}{2 f_{D,max}^{(s)} T_{sym}}, \qquad D_s^{(s)} < \frac{\lambda}{2d \sin \frac{\theta^{(s)}}{2}} \approx \frac{\lambda}{d\,\theta^{(s)}} \qquad (13)$$

In embodiments the pilot grid (11) can be assembled such that (10) holds and the pilot spacings $D_f^{(s)}$, $D_t^{(s)}$ and $D_s^{(s)}$ satisfy the sampling theorem (13) for all deployments $s \in S$.

In embodiments the processor 120 may comprise a Wiener filter or a mismatched Wiener filter. A Wiener interpolation filter (WIF) with model mismatch is characterized by the fact that the correlation function that is assumed to generate the filter coefficients $R'$ is different from the actual correlation $R$ in (6). The advantage of a mismatched WIF is that the filter coefficients can be computed off-line based on *a priori* knowledge of the worst-case propagation conditions of the corresponding deployment scenario $s \in S$. These worst-case conditions for maximum channel delay $\tau_w^{(s)} \geq \tau_{max}^{(s)}$, maximum Doppler $f_{D,w}^{(s)} \geq f_{D,max}^{(s)}$ and angular spread $\theta_w^{(s)} \geq \theta^{(s)}$ then replace the true values in (13). To generate the filter coefficients the mean AoD $\phi_w$ as well as the average SNR needs to be estimated.

The MSE of the $1 \times M$ dimension 3D estimator $w^{(s)}$ of deployment scenario $s \in S$ can be expressed in the general form

$$E[|\,h_{n,\ell}^{\mu} - \hat{h}_{n,\ell}^{\mu}\,|^2] = E[|\,h_{n,\ell}^{\mu}\,|^2] - 2\,\mathrm{Re}\{\mathbf{w}^{(s)H}\,\mathbf{r}_{h\tilde{y}}[\mu,n,\ell]\} + \mathbf{w}^{(s)H}\mathbf{R}_{\tilde{h}\tilde{h}}\mathbf{w}^{(s)} \qquad (14)$$

with $\hat{h}_{n,\ell}^{\mu} = \mathbf{w}^{(s)H}\tilde{\mathbf{y}}$. The M dimension vector $\tilde{\mathbf{y}}$ contains the received pilots in time, frequency and space that are used to estimate $\hat{h}_{n,\ell}^{\mu}$. The auto and cross-correlation matrices $\mathbf{R}_{yy}$ and $\mathbf{r}_{h\tilde{y}}[\mu,n,\ell]$ are defined above.

A MIMO-OFDM system with $N_T = 8$ transmit antennas is considered based on the WINNER specifications, cf. IST-4-027756 WINNER II, "D6.13.14 WINNER II System Concept Description," Dec. 2007. One frame consists of $L = 12$ OFDM symbols, and each OFDM symbol is composed of $N_c = 1024$ subcarriers. A cyclic prefix of duration $T_{CP} = 128 \cdot T_{spl}$ is employed. The signal bandwidth is 40MHz , which translates to a sampling duration of $T_{spl}$=25ns. This results in an OFDM symbol duration of $T_{sym}$=35.97μs of which the cyclic prefix is $T_{CP}$=3.2μs.

For the pilot spacings in time, frequency and space $D_t = 10$, $D_f = 4$ and $D_s = 2$ are chosen. Furthermore, $\ell_0 = 1$, $n_0 = 1$ and $s_0 = 0$ is set. Orthogonality between pilots of different transmit antennas is maintained by setting $d_{sf} = 1$ and $d_{st} = 0$ in (11). Finally, a diamond shaped space-frequency grid with $\delta_{sf} = 1$ is used, as depicted in Fig. 2.

For the outdoor macro-cell scenario 1, a typical urban channel model specified within the WINNER project (model C2 in IST-4-027756 WINNER II, "D1.1.2 WINNER II Channel Models," Sept. 2007 with mobile velocities up to 50km/h. At 5GHz carrier frequency this translates to a normalized maximum Doppler frequency of $f_{D,max}T_{sym} \leq 0.0067$. The considered channel model C2 has an angular spread of 35˚, cf. IST-4-027756 WINNER II, "D1.1.2 WINNER II Channel Models," Sept. 2007. Thus spatial interpolation with $D_s = 2$ is feasible.

For the indoor hot-spot scenario 2, an indoor office environment with no line of sight (NLOS) between transmitter and receiver is chosen (model A1-NLOS in IST-4-027756 WINNER II, "D1.1.2 WINNER II Channel Models," Sept. 2007), with an angular spread exceeding 200˚, cf. IST-4-027756 WINNER II, "D1.1.2 WINNER II Channel Models," Sept. 2007. Hence, spatial interpolation is clearly not possible, so the pilot spacings $D_t^{(2)} = 10$, and $D_s^{(2)} = 1$ apply. It is to be noted that for both scenarios the same pilot grid is used.

The channel estimation unit is implemented by a WIF with $M_t = 2$, $M_f = 8$ and $M_s = 4$ filter coefficients in time, frequency and space. To generate the filter coefficients, knowledge of the second order statistics in the form of the auto and cross correlation matrices is assumed to be available.

In other words, the processor 120 may comprise a Wiener filter or a miss-matched Wiener filter for processing the reference symbols to obtain a reference radio channel estimate. Moreover, the radio channel condition detector 130 may be adapted for detecting the first or the second radio channel condition by detecting a Doppler spread, an angular spread or a delay spread. The interpolator 140 may be adapted for interpolating in all three dimensions. In other words, the interpolator 140 may be adapted for interpolating in two of the three dimensions independent on the channel condition. Generally, the interpolator 140 may be adapted for interpolating in all those dimensions for which a sufficient correlation was detected for the channel condition. In embodiments, the radio channel condition detector 130 may be adapted for detecting the first or the second radio channel condition based on the reference symbols or based on the reference radio channel estimates.

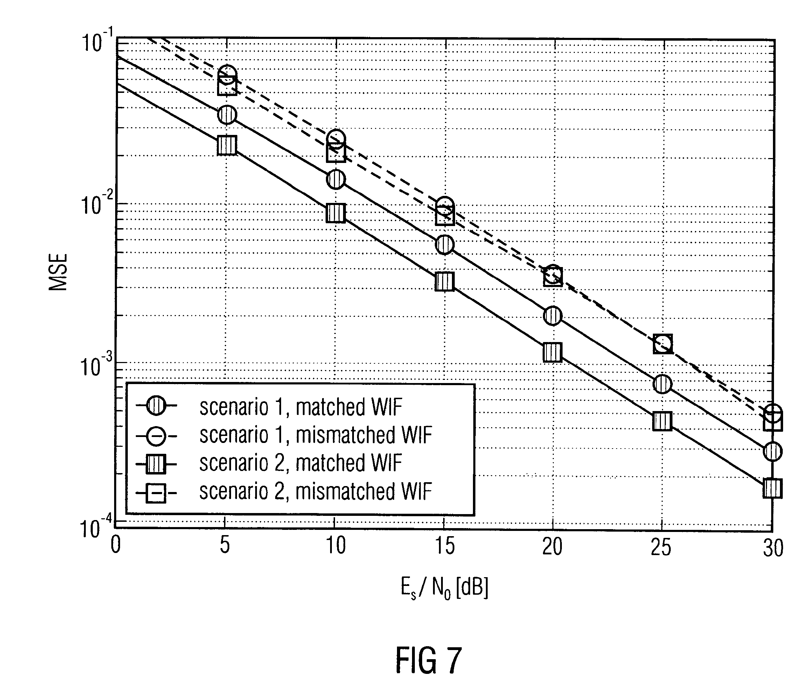

Fig. 7 illustrates simulation results in terms of the mean square error (MSE) versus the signal-to-noise ratio $\gamma$ (SNR = signal-to-noise ratio) for 3D PACE with $N_T = 8$ transmit antennas. Results are furthermore indicated for the matched and the miss-matched WIF (WIF = Wiener filter), which are drawn with solid and dashed lines, respectively. Fig. 7 shows results for RHiLoC3D-PACE for scenarios 1 and 2. It can be seen that the embodiment of RHiLoC pilot grid effectively supports both scenarios. This is true for both matched and mismatched estimators, processors 120 respectively.

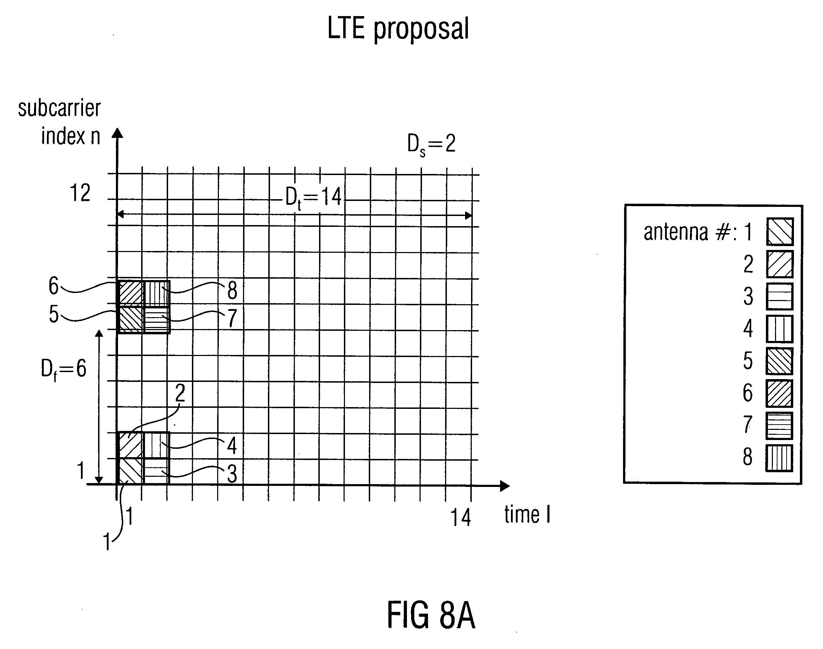

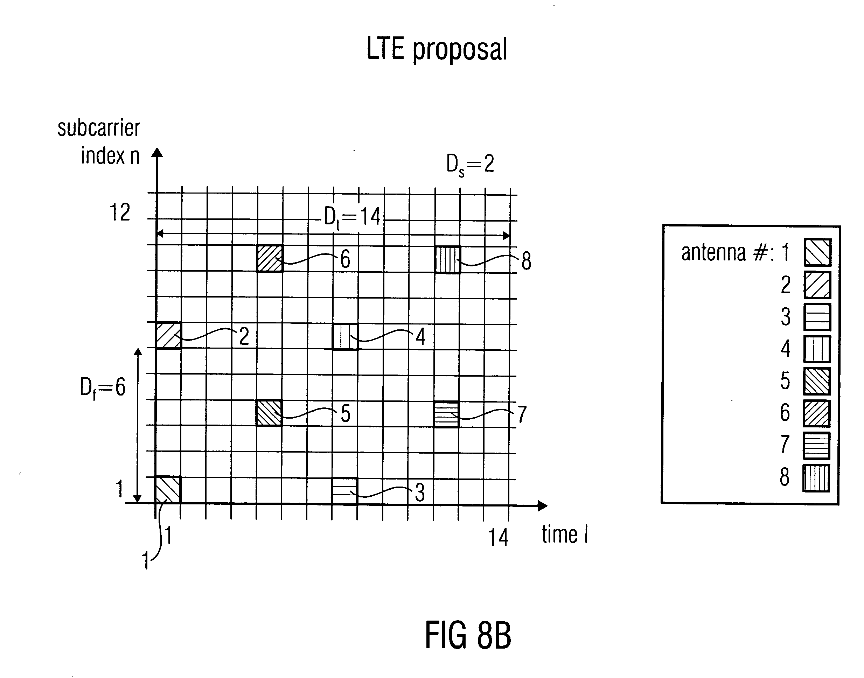

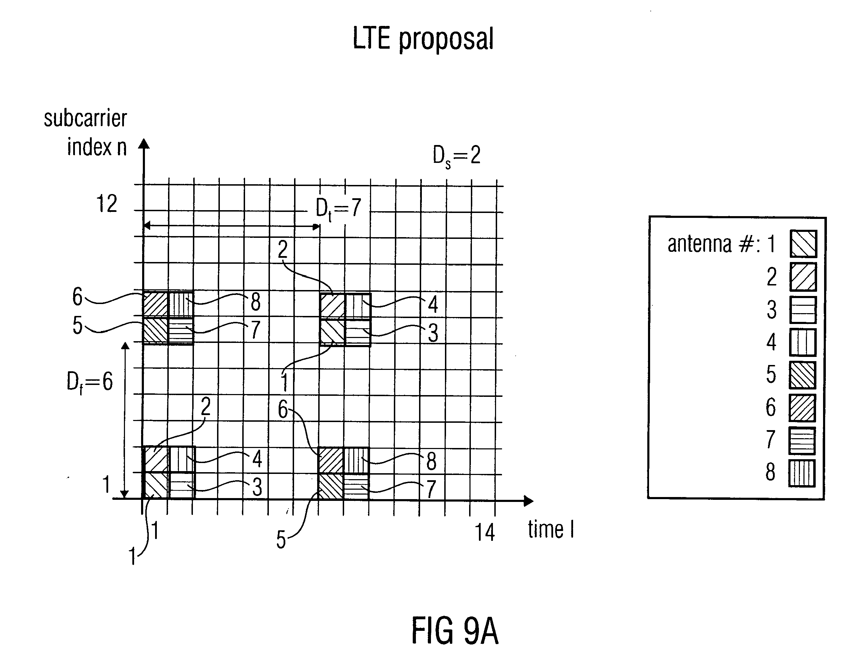

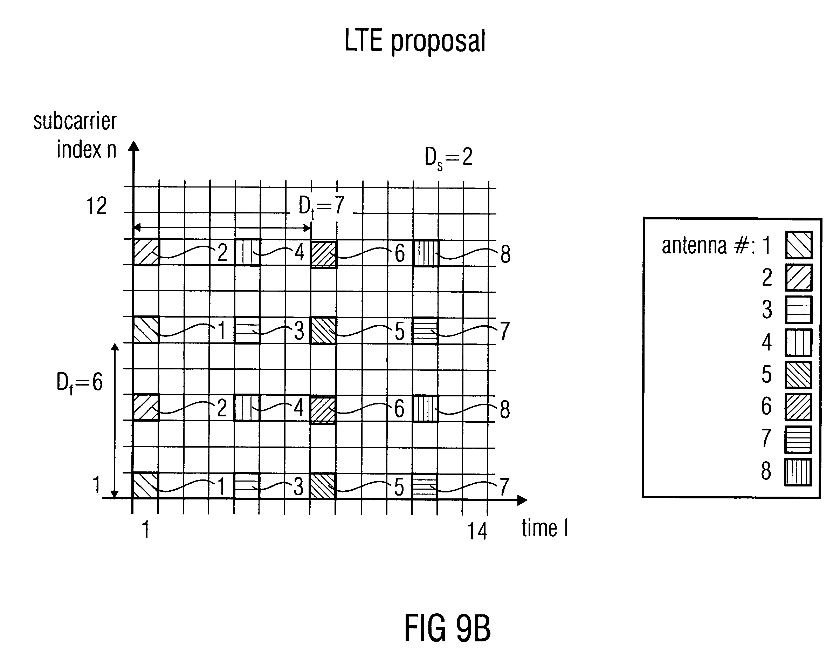

In the following, an embodiment will be described, which can be supported by the LTE mobile communication system. Fig. 8a and Fig. 8b show an LTE pilot grid that supports CQI-RS (CQI-RS = channel quality information reference symbols) for $N_T = 8$ transmit antennas with eight pilot symbols per resource block, which is also referred to as grid A within the LTE specifications. Figs. 9a and 9b illustrate similar pilot grids with 16 pilots per resource block, which is also referred to as grid B within the LTE specifications. In Figs. 8a, 8b, 9a and 9b, an illustration is used where a time-frequency plane is shown, and where along the frequency axis, the subcarrier n is shown and along the time axis, the number of the time slot is indicated. Moreover, each of the illustrations shows pilot symbols for eight transmit antennas, which are indicated by color and also by a number within the respective pilot grid.

Fig. 8a shows a diamond space-time-frequency grid with eight pilots per resource block, Fig. 8b shows a distributed implementation that fits the LTE pilot pattern with 8 pilots per resource block.

Fig. 9a shows the diamond space-time-frequency grid with sixteen pilots per resource block, Fig. 9b shows the distributed implementation that fits the LTE pilot pattern with 16 pilots per resource block.

The embodiment of the RHiLoC pilot grid can be applied to support common reference symbols (RS) for LTE-Advanced with $N_T = 8$ transmit antennas. These common RS are needed to provide the receiver with channel quality information (CQI), and are therefore termed as CQI-RS. In addition dedicated RS can be utilized to demodulate the received signal including spatial precoding. Hence, pilot overhead for $N_T = 8$ is a major issue. Nevertheless, the pilot grid needs to satisfy the sampling theorem (13) for satisfactory performance. Dependent on the worst-case channel conditions and the upper limits on the acceptable pilot overheads, two grids are depicted in Fig. 8 and 9, with 8 and 16 pilots per resource block (RB).

Conventional pilot design can be either adaptively modified to match channel conditions by embodiments, or can be dimensioned to meet worst-case channel conditions. The current invention, on the other hand, acknowledges the reversal trend between spatial correlation and time-frequency correlations. Compared to existing solutions, a substantially reduced pilot overhead can be achieved.

One pilot grid is appropriate for a wide range of potential deployment scenarios, ranging from indoor environments to outdoor macro-cells. The only thing that needs to be adjusted to the observed deployment scenario is the channel estimation unit.

Embodiments may provide the advantage that less overhead due to pilots compared to the conventional pilot grids is achieved. For MIMO-OFDM the embodiment of RHiLoC-PACE may reduce pilot overhead significantly. Especially in deployment scenarios with pronounced reversal correlation properties such as indoor hot spots together with large-scale macro cells embodiments may utilize a tremendous potential to reduce pilot overhead. Embodiments may further provide the advantage the one pilot grid that fits various deployment scenarios can be used. The embodiment of RHiLoC-PACE may support different deployment scenarios. One pilot grid can support outdoor macro-cells as well as hot spot indoor deployments in embodiments.

Moreover, embodiments may provide the advantage that backward compatibility to existing system may be achieved. Embodiments may be applied to 3GPP LTE-Advanced backward compatibility with LTE (long term evolution), cf. ETSI TS 36.211 V8.5.0, "3rd Generation Partnership Project (3GPP); Evolved Universal Terrestrial Radio Access (E-UTRA); Physical Channels and Modulation (Release 8)," tech. rep., Dec. 2008 is of paramount importance. The embodiment of RHiLoC-PACE can be designed such that the original LTE pilot grid is retained; just the mapping of pilot symbols to specific antenna ports is modified. Hence if LTE and LTE-Advanced terminals are grouped into disjoint subbands backward compatibility is maintained. Only if LTE and LTE-Advanced terminals share the same frequency band, the channel estimation unit of the LTE terminal needs to be modified.

Depending on certain implementation requirements of the inventive methods, the inventive methods can be implemented in hardware or in software. The implementation can be performed using a digital storage medium, in particular, a flash memory, a disc, a DVD or a CD having an electronically-readable control signal stored thereon, which co-operates with a programmable computer system such that the inventive methods are performed. Generally, the present invention is therefore a computer program product with a program code stored on a machine-readable carrier, the program code being operated for performing the inventive methods when the computer program product runs on a computer. In other words, the inventive methods are, therefore, a computer program having a program code for performing at least one of the inventive methods when the computer program runs on a computer or processor.

## Claims

1.  A radio channel estimator (100) for estimating a radio channel, the radio channel having at least a first dimension and a second dimension, the first and second dimensions being different and corresponding to a frequency, a time or a spatial dimension, the radio channel estimator (100) comprising:

    a receiver (110) for receiving reference symbols being separated in the first dimension and being separated in the second dimension;
    a processor (120) for processing the reference symbols to obtain a reference radio channel estimate for each of the separated reference symbols;
    a radio channel condition detector (130) for detecting a first radio channel condition, in which the radio channel has a higher correlation in the first dimension than in the second dimension, or a second radio channel condition, in which the radio channel has a higher correlation in the second dimension than in the first dimension; and
    an interpolator (140) for determining a radio channel estimate lying between at least two reference radio channel estimates by interpolating between two reference radio channel estimates of the first dimension when the first radio channel condition is detected and by interpolating between two reference radio channel estimates of the second dimension when the second radio channel condition is detected.

2.  The radio channel estimator (100) of claim 1, wherein the first dimension corresponds to the spatial dimension in terms of multiple transmit antennas, the second dimension corresponds to the frequency dimension and wherein the radio channel has a third dimension, the third dimension corresponding to the time dimension.

3.  The radio channel estimator (100) of claim 2, wherein two reference symbols of the first dimension are separated by $D_s$ transmit antennas, wherein two reference symbols of the second dimension are separated by $D_f$ subcarriers and wherein two reference symbols of the third dimension are separated by $D_t$ time slots with $D_s, D_f, D_t \in \mathbb{N}$ and $D_s, D_f, D_t > 1$.

4.  The radio channel estimator (100) of one of the claims 1 to 3, wherein the radio channel corresponds to an OFDM-MIMO radio channel.

5.  The radio channel estimator (100) of one of the preceding claims, wherein the processor (120) comprises a Wiener filter for processing the reference symbols.

6.  The radio channel estimator (100) of one of the preceding claims, wherein the processor (120) comprises a mismatched Wiener filter for processing the reference symbols.

7.  The radio channel estimator (100) of one of the preceding claims, wherein the first channel condition corresponds to an outdoor scenario and the second channel condition corresponds to an indoor scenario.

8.  The radio channel estimator (100) of one of the preceding claims, wherein the radio channel condition detector (130) is adapted for detecting a Doppler spread, an angular spread or a delay spread for detecting the first or the second radio channel condition.

9.  The radio channel estimator (100) of one of the preceding claims, wherein the radio channel condition detector (130) is adapted for detecting the first or second radio channel condition based on the reference symbols or based on the reference radio channel estimates.

**10.** The radio channel estimator (100) of one of the claims 2 to 9, wherein the interpolator (140) is adapted for interpolating in two of the three dimensions.

**11.** The radio channel estimator (100) of one of the claims 2 to 10, wherein the first dimension corresponds to 8 transmit antennas and the second dimension corresponds to 1024 subcarriers.

**12.** A method for estimating a radio channel, the radio channel having at least a first dimension and a second dimension, the first and second dimensions being different and corresponding to a frequency, a time or a spatial dimension, comprising the steps of:

receiving reference symbols being separated in the first dimension and being separated in the second dimension; processing the reference symbols to obtain a reference radio channel estimate for each of the separated reference symbols;

detecting a first radio channel condition, in which the radio channel has a higher correlation in the first dimension than in the second dimension, or a second channel condition, in which the radio channel has a higher correlation in the second dimension than in the first dimension; and

determining a radio channel estimate lying between at least two reference radio channel estimates by interpolating between two reference radio channel estimates of the first dimension, when the first channel condition is detected and by interpolating between two reference radio channel estimates of the second dimension, when the second radio channel condition is detected.

**13.** A transmitter for enabling radio channel estimation of a radio channel, the radio channel having at least a first dimension and a second dimension, the first and second dimensions being different and corresponding to a frequency, a time or a spatial dimension, the radio channel having at least a first condition, in which a correlation measure of the radio channel of the first dimension is higher than a correlation measure of the radio channel of the second dimension, and a second condition, in which the correlation measure of the radio channel of the second dimension is higher than the correlation measure of the radio channel of the first dimension, comprising:

a reference symbol generator for generating reference symbols such that in the first condition, two reference symbols are separated in the second dimension by more than the correlation measure of the radio channel of the second dimension, and in the second condition, two reference symbols are separated in the first dimension by more than the correlation measure of the radio channel of the first dimension.

**14.** Method for enabling radio channel estimation of a radio channel, the radio channel having at least a first dimension and a second dimension, the first and second dimensions being different and corresponding to a frequency, a time or a spatial dimension, the radio channel having at least a first condition, in which a correlation measure of the radio channel of the first dimension is higher than the correlation measure of the radio channel of the second dimension, and a second condition, in which the correlation measure of the radio channel of the second dimension is higher than the correlation measure of the radio channel of the first dimension, comprising a step of:

generating reference symbols such that in the first condition, two reference symbols are separated in the second dimension by more than the correlation measure of the radio channel of the second dimension, and in the second condition, two reference symbols are separated in the first dimension by more than the correlation measure of the radio channel of the first dimension.

**15.** Computer program having a program code for performing the methods of claims 12 or 14 when the computer program runs on a computer or processor.

**Amended claims in accordance with Rule 137(2) EPC.**

**1.** A radio channel estimator (100) for estimating a radio channel, the radio channel having a first dimension corresponding to a spatial dimension in terms of multiple transmit antennas, a second dimension corresponding to a frequency dimension in terms of multiple subcarriers, and a third dimension corresponding to a time dimension in terms of multiple time slots, the radio channel estimator (100) comprising:

a receiver (110) for receiving reference symbols being separated by $D_s$ transmit antennas in the first dimension, being separated by $D_f$ subcarriers in the second dimension and being separated by $D_t$ time slots in the third dimension, with $D_s$, $D_f$, $D_t \in \mathbb{N}$ and $D_s$, $D_f$, $D_t > 1$ ;

a processor (120) for processing the reference symbols to obtain a reference radio channel estimate for each of the separated reference symbols;

a radio channel condition detector (130) for detecting a first radio channel condition, in which the radio channel has a higher correlation in the first dimension than in the second dimension, or a second radio channel condition, in which the radio channel has a higher correlation in the second dimension than in the first dimension; and

an interpolator (140) for determining a radio channel estimate lying between at least two reference radio channel estimates by interpolating between two reference radio channel estimates of the first dimension when the first radio channel condition is detected and by interpolating between two reference radio channel estimates of the second dimension and/or between two reference radio channel estimates of the third dimension when the second radio channel condition is detected.

**2.** The radio channel estimator (100) of claim 1, wherein the radio channel condition detector (130) is adapted for detecting a correlation of the radio channel for each dimension of the radio channel and wherein the interpolator (140) is adapted for interpolating between reference radio channels for each dimension for which a correlation is detected.

**3.** The radio channel estimator (100) of one of the claims 1 to 2, wherein the radio channel corresponds to an OFDM-MIMO radio channel.

**4.** The radio channel estimator (100) of one of the preceding claims, wherein the processor (120) comprises a Wiener filter for processing the reference symbols.

**5.** The radio channel estimator (100) of one of the preceding claims, wherein the processor (120) comprises a mismatched Wiener filter for processing the reference symbols.

**6.** The radio channel estimator (100) of one of the preceding claims, wherein the first channel condition corresponds to an outdoor scenario and the second channel condition corresponds to an indoor scenario.

**7.** The radio channel estimator (100) of one of the preceding claims, wherein the radio channel condition detector (130) is adapted for detecting a Doppler spread, an angular spread or a delay spread for detecting the first or the second radio channel condition.

**8.** The radio channel estimator (100) of one of the preceding claims, wherein the radio channel condition detector (130) is adapted for detecting the first or second radio channel condition based on the reference symbols or based on the reference radio channel estimates.

**9.** The radio channel estimator (100) of one of the claims 1 to 8, wherein the first dimension corresponds to 8 transmit antennas and the second dimension corresponds to 1024 subcarriers.

**10.** A method for estimating a radio channel, the radio channel having at least a first dimension corresponding to a spatial dimension in terms of multiple transmit antennas, a second dimension corresponding to a frequency dimension in terms of multiple subcarriers, and a third dimension corresponding to a time dimension in terms of multiple time slots, comprising the steps of:

receiving reference symbols being separated by $D_s$ transmit antennas in the first dimension, being separated by $D_f$ subcarriers in the second dimension and being separated by $D_t$ time slots in the third dimension, with $D_s$, $D_f$, $D_t \in \mathbb{N}$ and $D_s$, $D_f$, $D_t > 1$ ;

processing the reference symbols to obtain a reference radio channel estimate for each of the separated reference symbols;

detecting a first radio channel condition, in which the radio channel has a higher correlation in the first dimension than in the second dimension, or a second channel condition, in which the radio channel has a higher correlation in the second dimension than in the first dimension; and

determining a radio channel estimate lying between at least two reference radio channel estimates by interpolating between two reference radio channel estimates of the first dimension, when the first channel condition is detected and by interpolating between two reference radio channel estimates of the second dimension and between two reference radio channels of the third dimension, when the second radio channel condition is detected.

**11.** Computer program having a program code for performing the method of claim 10 when the computer program runs on a computer or processor.

FIG 1A

EP 2 234 354 A1

FIG 1B

diamond 3D pilot grid

FIG 2

EP 2 234 354 A1

FIG 3

Scenario 1: outdoor macro-cell

$$\begin{pmatrix} \phi + \dfrac{\theta^{(1)}}{2} \\ 0 \\ -f_{D,max}^{(1)} \end{pmatrix}$$

$$\begin{pmatrix} \phi - \dfrac{\theta^{(1)}}{2} \\ 0 \\ -f_{D,max}^{(1)} \end{pmatrix}$$

$$\begin{pmatrix} \phi + \dfrac{\theta^{(1)}}{2} \\ \tau_{max}^{(1)} \\ f_{D,max}^{(1)} \end{pmatrix}$$

$$\begin{pmatrix} \phi - \dfrac{\theta^{(1)}}{2} \\ \tau_{max}^{(1)} \\ f_{D,max}^{(1)} \end{pmatrix}$$

$(0,0,0)$

Scenario 2: indoor hot spot

$$\begin{pmatrix} \phi + \dfrac{\theta^{(2)}}{2} \\ 0 \\ -f_{D,max}^{(2)} \end{pmatrix}$$

$$\begin{pmatrix} \phi - \dfrac{\theta^{(2)}}{2} \\ 0 \\ -f_{D,max}^{(2)} \end{pmatrix}$$

$$\begin{pmatrix} \phi + \dfrac{\theta^{(2)}}{2} \\ \tau_{max}^{(2)} \\ f_{D,max}^{(2)} \end{pmatrix}$$

$$\begin{pmatrix} \phi - \dfrac{\theta^{(2)}}{2} \\ \tau_{max}^{(2)} \\ f_{D,max}^{(2)} \end{pmatrix}$$

$(0,0,0)$

AoD

doppler

delay

FIG 4

Multi - scenario diamond 3D pilot grid

indoor hot spot

macro-cell

FIG 5

frequency

space

space-time grid

FIG 6A

space-time grid

FIG 6B

FIG 7

EP 2 234 354 A1

EP 2 234 354 A1

LTE proposal

FIG 8A

LTE proposal

FIG 8B

EP 2 234 354 A1

LTE proposal

FIG 9A

# LTE proposal

FIG 9B

EP 2 234 354 A1

EP 2 234 354 A1

Europäisches
Patentamt
European
Patent Office
Office européen
des brevets

# EUROPEAN SEARCH REPORT

Application Number

EP 09 00 4199

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | OBRADOVIC D ET AL: "EM-based semi-blind channel estimation method for MIMO-OFDM communication systems" NEUROCOMPUTING, ELSEVIER SCIENCE PUBLISHERS, vol. 71, no. 10-12, 1 June 2008 (2008-06-01), pages 2388-2398, XP022703826 AMSTERDAM, NL ISSN: 0925-2312 [retrieved on 2008-02-16] * page 2388, column 2, paragraph 1 * * page 2390, column 1, last paragraph - column 2 * * page 2391, column 2, paragraph 8 * Section 4.4. 6. Conclusions | 1,4-9, 12-15 | INV. H04L25/02 H04L5/00 |
| X | ----- SOO-KWAN KIM ET AL: "3-Dimensional MMSE Channel Estimation in Multi-antenna OFDM Systems" DIGITAL TELECOMMUNICATIONS, 2008. ICDT '08. THE THIRD INTERNATIONAL CONFERENCE ON, 29 June 2008 (2008-06-29), pages 6-10, XP031284204 IEEE, PISCATAWAY, NJ, USA ISBN: 978-0-7695-3188-5 * page 6, column 1, last paragraph - column 2, paragraph 2 * section IV * figure 1 * * table 1 * ----- -/-- | 1-6, 10-12 | TECHNICAL FIELDS SEARCHED (IPC) H04L |

The present search report has been drawn up for all claims

| Place of search | Date of completion of the search | Examiner |
|---|---|---|
| The Hague | 3 November 2009 | Moreno, Marta |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt
European
Patent Office
Office européen
des brevets

**EUROPEAN SEARCH REPORT**

Application Number

EP 09 00 4199

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2008/093253 A (NXP BV [NL]; CASAMAJOU YANN [FR]) 7 August 2008 (2008-08-07)<br>* page 2, line 20 - page 3, line 7 *<br>* page 3, line 13 - line 20 *<br>* page 4, line 4 - line 27 *<br>* page 7, line 7 - line 10 *<br>* page 7, line 22 - line 23 *<br>* page 10, line 31 - page 11, line 11 *<br>* page 12, line 1 - line 8 *<br>----- | 1,7-9, 12-15 | |
| X | US 2003/012308 A1 (SAMPATH HEMANTH T [US] ET AL) 16 January 2003 (2003-01-16)<br>* paragraph [0008] - paragraph [0010] *<br>* paragraph [0012] *<br>* paragraph [0023] *<br>* paragraph [0037] *<br>* paragraph [0042] *<br>* paragraph [0044] *<br>* paragraph [0053] *<br>* paragraph [0067] *<br>* paragraph [0071] *<br>* figure 2 *<br>----- | 1,4,8,9, 11,12,15 | |
| X | US 2008/123758 A1 (PAIK KYUNG-HYUN [KR] ET AL) 29 May 2008 (2008-05-29)<br>* paragraph [0014] - paragraph [0015] *<br>* paragraph [0019] *<br>----- | 1,7-9, 12-15 | |
| | -/-- | | |

TECHNICAL FIELDS
SEARCHED      (IPC)

The present search report has been drawn up for all claims

| Place of search | Date of completion of the search | Examiner |
|---|---|---|
| The Hague | 3 November 2009 | Moreno, Marta |

EPO FORM 1503 03.82 (P04C01)

Europäisches
Patentamt

European
Patent Office

Office européen
des brevets

# EUROPEAN SEARCH REPORT

Application Number

EP 09 00 4199

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CHOI J-W ET AL: "COMPLEXITY-REDUCED CHANNEL ESTIMATION IN SPATIALLY CORRELATED MIMO-OFDM SYSTEMS" IEICE TRANSACTIONS ON COMMUNICATIONS, COMMUNICATIONS SOCIETY, vol. E90B, no. 9, 1 September 2007 (2007-09-01), pages 2609-2612, XP001508827 TOKYO, JP ISSN: 0916-8516 Section 3. | 1-15 | |
| A | WANG J ET AL: "PILOT SYMBOL AIDED MAP-BASED 3D CHANNEL ESTIMATION FOR MULTI-USER MIMO-OFDM SYSTEMS" IEICE TRANSACTIONS ON COMMUNICATIONS, COMMUNICATIONS SOCIETY, vol. E89B, no. 3, 1 March 2006 (2006-03-01), pages 801-808, XP001240948 TOKYO, JP ISSN: 0916-8516 * figure 2 * | 13,14 | TECHNICAL FIELDS SEARCHED (IPC) |
| T | GUNTHER AUER: "3D Pilot Aided Channel Estimation" 2009 IEEE WIRELESS COMMUNICATIONS & NETWORKING CONFERENCE : WCNC ; BUDAPEST, HUNGARY, 5 - 8 APRIL 2009, PISCATAWAY, NJ : IEEE, [Online] 5 April 2009 (2009-04-05), pages 1-6, XP002533018 ISBN: 978-1-4244-2948-6 Retrieved from the Internet: URL:http://ieeexplore.ieee.org/stamp/stamp.jsp?arnumber=04917487> [retrieved on 2009-04-05] * the whole document * | 1-15 | |

The present search report has been drawn up for all claims

| Place of search | Date of completion of the search | Examiner |
|---|---|---|
| The Hague | 3 November 2009 | Moreno, Marta |

EPO FORM 1503 03.82 (P04C01)

**EP 2 234 354 A1**

## ANNEX TO THE EUROPEAN SEARCH REPORT
## ON EUROPEAN PATENT APPLICATION NO.

EP 09 00 4199

This annex lists the patent family members relating to the patent documents cited in the above-mentioned European search report.
The members are as contained in the European Patent Office EDP file on
The European Patent Office is in no way liable for these particulars which are merely given for the purpose of information.

03-11-2009

| Patent document cited in search report | | Publication date | Patent family member(s) | | Publication date |
|---|---|---|---|---|---|
| WO 2008093253 | A | 07-08-2008 | EP | 2109974 A1 | 21-10-2009 |
| US 2003012308 | A1 | 16-01-2003 | NONE | | |
| US 2008123758 | A1 | 29-05-2008 | KR | 20080044721 A | 21-05-2008 |

EPO FORM P0459

For more details about this annex : see Official Journal of the European Patent Office, No. 12/82

33

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **I. E. Telatar.** Capacity of Multi-Antenna Gaussian Channels. *European Trans. Telecommun.,* November 1999, vol. 10, 585-595
- **G. J. Foschini ; M. J. Gans.** On Limits of Wireless Communications in a Fading Environment when using Multiple Antennas. *Wireless Personal Communications,* 1998, vol. 6, 311-335
- **R. Van Nee ; V. K. Jones ; G. Awater ; A. Van Zelst ; J. Gardner ; G. Steele.** The 802.11n MIMO-OFDM standard for wireless LAN and beyond. *Wireless Personal Communications,* May 2009, vol. 37, 445-453
- **M. Tanno ; Y. Kishiyama ; N. Miki ; K. Higuchi ; M. Sawahashi.** Evolved UTRA - physical layer overview. *Proc. IEEE Workshop Signal Processing Advances Wireless Commun. (SPAWC 2007),* June 1997, 1-8
- **J. K. Cavers.** An Analysis of Pilot Symbol Assisted Modulation for Rayleigh Fading Channels. *IEEE Trans. Vehic. Technol.,* November 1991, vol. VT-40, 686-693
- **P. Höher.** TCM on Frequency Selective Land-Mobile Radio Channels. *Proc. 5th Tirrenia Int. Workshop on Dig. Commun.,* September 1991, 317-328
- **M. Tanno ; Y. Kishiyama ; N. Miki ; K. Higuchi ; M. Sawahashi.** Evolved UTRA - physical layer overview. *Proc. IEEE Workshop Signal Processing Advances Wireless Commun. (SPAWC 2007),* June 2007, 1-8
- **G. Auer.** 3D Pilot Aided Channel Estimation. *Proc. Wireless Commun. & Networking Conf. (WCNC 2009),* April 2009
- **B. Hassibi ; B. M. Hochwald.** How much Training is Needed in Multiple-Antenna Wireless Links?. *IEEE Trans. Information Theory,* April 2003, vol. 49, 951-963
- **G. Auer.** Analysis of Pilot-Symbol Aided Channel Estimation for OFDM Systems with Multiple Transmit Antennas. *Proc. IEEE Int. Conf. Commun. (ICC 2004),* June 2004, 3221-3225
- **P. Zillmann ; G. Fettweis.** MIMO Channel Estimation with Dimension Reduction. *Proc. Int. Symp. Wireless Pers. Multimedia Commun. (WPMC 2002),* October 2002
- **J.-W. Choi ; Y.-H. Lee.** Complexity-Reduced Channel Estimation in Spatially Correlated MIMO-OFDM Systems. *IEICE Trans. Commun.,* September 2007, vol. E90-B, 2609-2612
- **H. Miao ; M. J. Juntti.** Space-Time Channel Estimation and Performance Analysis for Wireless MIMO-OFDM Systems With Spatial Correlation. *IEEE Trans. Vehic. Technol.,* November 2005, vol. 54, 2003-2016
- **J. Wang ; K. Araki.** Pilot Symbol Aided MAP-Based 3D Channel Estimation for Multi-User MIMO-OFDM Systems. *IEICE Trans. Commun.,* March 2006, vol. E89-B, 801-808
- **W. C. Jakes.** Microwave Mobile Communications. Wiley, 1974
- **F. Sanzi ; J. Speidel.** An Adaptive Two-Dimensional Channel Estimator for Wireless OFDM with Application to Mobile DVB-T. *IEEE Trans. Broadcasting,* June 2000, vol. 46, 128-133
- **J. K. Cavers.** An Analysis of Pilot Symbol Assisted Modulation for Rayleigh Fading Channels. *IEEE Trans. Vehic. Technol.,* November 1991, vol. VT-40, 686-693
- **Y. Li.** Pilot-Symbol-Aided Channel Estimation for OFDM in Wireless Systems. *IEEE Trans. Vehic. Technol.,* July 2000, vol. 49, 1207-1215
- **J. Choi ; Y. Lee.** Optimum Pilot Pattern for Channel Estimation in OFDM Systems. *IEEE Trans. Wireless Commun.,* September 2005, vol. 4, 2083-2088
- **I. Barhumi ; G. Leus ; M. Moonen.** Optimal training design for MIMO OFDM systems in mobile wireless channels. *IEEE Trans. Signal Processing,* June 2003, vol. 51, 1615-1624
- **W. G. Jeon ; J. H. Paik ; Y. S. Cho.** Two Dimensional MMSE Channel Estimation for OFDM Systems with Transmitter Diversity. *Proc. IEEE Vehic. Technol. Conf. 2001-Fall (VTC'F01),* October 2001
- **G. Auer.** Channel Estimation for OFDM Systems with Multiple Transmit Antennas by Filtering in Time and Frequency. *Proc. IEEE Vehic. Technol. Conf. 2003-Fall (VTC'F03),* October 2003